# EUROPÄISCHE PATENTSCHRIFT

(11) **EP 4 259 508 B1**
(45) Veröffentlichungstag und Bekanntmachung des Hinweises auf die Patenterteilung: **24.09.2025**
(21) Anmeldenummer: 21836013.9
(22) Anmeldetag: 06.12.2021
(51) Int. Cl.: B62D 1/16

(54) **LENKSÄULE FÜR EIN KRAFTFAHRZEUG UND KRAFTFAHRZEUG**
STEERING COLUMN FOR A MOTOR VEHICLE AND MOTOR VEHICLE
COLONNE DE DIRECTION POUR VÉHICULE AUTOMOBILE ET VÉHICULE AUTOMOBILE

(30) Priorität: 08.12.2020 DE 102020215469
(43) Veröffentlichungstag der Anmeldung: 18.10.2023
(73) Patentinhaber: thyssenkrupp Presta AG, 9492 Eschen (LI); thyssenkrupp AG, 45143 Essen (DE)
(72) Erfinder: CARON, Eric, 6800 Feldkirch (AT); DEEG, Benjamin, 6850 Dornbirn (AT); LAMPERT, Walter, 6811 Göfis (AT)
(74) Vertreter: thyssenkrupp Intellectual Property GmbH
(86) Internationale Anmeldenummer: PCT/EP2021/084308
(87) Internationale Veröffentlichungsnummer: WO 2022/122608

(56) Entgegenhaltungen:
- US-A- 5 743 150
- US-A1- 2017 282 960

## Beschreibung

### Stand der Technik

Die Erfindung betrifft eine Lenksäule für ein Kraftfahrzeug, umfassend eine Trageinheit, die einen Halteabschnitt aufweist, in dem eine Lenkwelle um ihre in Längsrichtung erstreckte Längsachse drehbar gelagert ist, und die mindestens einen mit dem Halteabschnitt verbundenen Anbindungsabschnitt aufweist. Weiterhin betrifft die Erfindung ein Kraftfahrzeug mit einer derartigen Lenksäule, wobei mindestens ein elastisches Stützelement nach außen vorstehend an der Trageinheit angebracht ist, wobei der Anbindungsabschnitt ein Anbindungselement aufweist, welches in einer Anbindungsrichtung quer zur Längsrichtung ausgerichtet ist.

Die Lenksäule eines Kraftfahrzeugs umfasst eine um ihre Längsachse drehbar gelagerte Lenkwelle, an deren in Fahrtrichtung hinteren Abschnitt, der üblicherweise eine Lenkspindel aufweist, ein Lenkrad oder dergleichen Lenkhandhabe zur Eingabe von manuellen Lenkbefehlen angebracht ist. Eine als Lenkbefehl eingegebene Drehung der Lenkwelle kann in einer konventionellen mechanischen Lenkung über ein Lenkgetriebe und Spurstangen mechanisch in einen Lenkeinschlag der lenkbaren Räder umgesetzt werden, oder in einer Steer-by-Wire-Lenkung mittels elektrischer Winkelsensoren erfasst werden, welche auf die lenkbaren Räder wirkende elektromotorische Aktuatoren zur Erzeugung eines Lenkeinschlags ansteuern.

Zur Halterung und Positionierung im Fahrgastraum ist die Lenkwelle in einer Trageinheit gehalten und in der Regel in einer von der Trageinheit gehaltenen Manteleinheit drehbar gelagert. Die Trageinheit ist fest mit einer fahrzeugfesten Struktur der Fahrzeugkarosserie verbunden, beispielsweise durch Fixierung an einem Fahrzeugquerträger, beispielsweise durch Verschrauben oder dergleichen.

Die Trageinheit weist einen Halteabschnitt auf, in dem die Lenkwelle drehbar gehalten ist. In einer verbreiteten Ausführung, wie sie beispielsweise in der JP 2010-023797 A beschrieben ist, weist der bügelartige, im Profil U-förmige Halteabschnitt zwei einander bezüglich der Längsachse gegenüberliegende, quer zu dieser in einer Höhenrichtung nach unten erstreckte Seitenwangen auf, zwischen denen eine die Lenkwelle lagernde Manteleinheit fix oder verstellbar festlegbar ist. Mit dem Halteabschnitt ist mindestens ein Anbindungsabschnitt verbunden, der zur Anbindung der Trageinheit an die Fahrzeugkarosserie dient.

Ein Anbindungsabschnitt kann sich seitlich, in einer Seitenrichtung quer zur Längsrichtung relativ zum Halteabschnitt erstrecken, wobei zwei Anbindungsabschnitte einander zur Längsachse seitlich gegenüberliegend angebracht sein können. Über Anbindungs- oder Befestigungselemente, beispielsweise Befestigungsbohrungen oder Formschlusselemente wie Zapfen oder dergleichen, kann jeder Anbindungsabschnitt an der Fahrzeugkarosserie festgelegt werden. In den genannten Ausführungen erfolgt die Anbringung in einer Anbindungsrichtung quer zur Längsrichtung, beispielsweise durch Ansetzen der Anbindungsabschnitte von unten an den Fahrzeugquerträger. Durch die Befestigungsbohrungen, deren Achsrichtung parallel zur Anbindungsrichtung liegt, werden Verbindungsmittel wie Schrauben oder dergleichen hindurchgeführt damit die Anbindungsabschnitte fest mit der Fahrzeugkarosserie verspannt.

Für die im Fahrzeug montierte Lenksäule wird eine möglichst Steifigkeit angestrebt, was einer möglichst hohen Eigenfrequenz entspricht. Diese Eigenfrequenz wird maßgeblich beeinflusst durch die Anbindung der Trageinheit an der Fahrzeugkarosserie. In dem genannten Stand der Technik ist zur Sicherung der Verspannung vorgeschlagen worden, Federscheiben zwischen den Anbindungsabschnitten und einer fahrzeugfesten Struktur einzusetzen, die eine Vorspannkraft in der Anbindungsrichtung auf die Befestigungselemente ausüben. Nachteilig daran ist jedoch die unerwünschte Reduzierung der Eigenfrequenz. Außerdem erfordert der Einsatz der Federscheiben zwischen den Anbindungsabschnitten und der fahrzeugfesten Struktur die konstruktive Anpassung der Trageinheit, da ohne die Anpassungen die im Fahrzeug vorgesehene Position der Lenkspindel und damit das Lenkrad nicht mehr eingehalten ist. Dies ist aufwendig und teuer.

Eine Lenksäule der eingangs genannten Art ist beispielsweise aus der US 2017/282960 A1 oder der US 5 743 150 A bekannt

Angesichts der vorangehend erläuterten Problematik ist es eine Aufgabe der vorliegenden Erfindung, eine verbesserte Trageinheit anzugeben, die eine höhere Eigenfrequenz ermöglicht und nur geringere konstruktionsbedingte Anpassungen erforderlich macht.

### Darstellung der Erfindung

Diese Aufgabe wird erfindungsgemäß gelöst durch die Lenksäule mit den Merkmalen des Anspruchs 1 und den Merkmalen des Anspruchs 15. Vorteilhafte Weiterbildungen ergeben sich aus den Unteransprüchen.

Bei einer Lenksäule für ein Kraftfahrzeug, umfassend eine Trageinheit, die einen Halteabschnitt aufweist, in dem eine Lenkwelle um ihre in Längsrichtung erstreckte Längsachse drehbar gelagert ist, und die mindestens einen mit dem Halteabschnitt verbundenen Anbindungsabschnitt aufweist, wobei mindestens ein elastisches Stützelement nach außen vorstehend an der Trageinheit angebracht ist, wobei der Anbindungsabschnitt ein Anbindungselement aufweist, welches in einer Anbindungsrichtung quer zur Längsrichtung ausgerichtet ist, ist erfindungsgemäß vorgesehen, dass das Stützelement in einer Stützrichtung quer zur Längsrichtung und quer zur Anbindungsrichtung vorsteht, und einen Kontaktbereich aufweist, der in Anbindungsrichtung einen Abstand zum Anbindungsabschnitt aufweist.

Dank dieser erfindungsgemäßen Ausführung ist eine höhere Eigenfrequenz ermöglicht und gleichzeitig sind nur geringe konstruktionsbedingte Anpassung gegenüber der Stand der Technik nötig, so dass die Lösung kostengünstig und ohne wesentlich erhöhten Bauraumbedarf realisiert werden kann.

Im Folgenden wird definitionsgemäß zugrunde gelegt, dass sich die Längsrichtung der Lenkwelle bezüglich der Fahrtrichtung des Fahrzeugs von hinten nach vorn erstreckt, die Höhenrichtung quer dazu von unten nach oben, und die Seitenrichtung seitlich quer zur Längs- und Höhenrichtung.

Erfindungsgemäß ist ein Stützelement federelastisch ausgebildet, beispielsweise als Federelement, und derart an der Trageinheit angebracht, dass es davon nach außen gerichtet in einer Stützrichtung federelastisch absteht. Dabei ist das Stützelement derart angeordnet, dass es im montierten Zustand gegen eine fahrzeugfeste Struktur, beispielsweise eine Anlage- oder Stützfläche an einem Querträger, abstützbar und elastisch verspannbar ist. Die elastische Kraft des Stützelements wirkt dabei in der Stützrichtung auf die Trageinheit, bevorzugt in etwa senkrecht in einer Normalenrichtung in dem Flächenbereich, wo das Stützelement nach außen abstehend an der Trageinheit positioniert ist.

Im Unterschied zum Stand der Technik, bei dem ein Federelement zwischen einem Stützelement und der fahrzeugfesten Struktur eingesetzt ist, als unmittelbar und ohne Abstand an dem Stützelement angebracht und abgestützt ist, ist das erfindungsgemäße Stützelement derart mit einem definierten Abstand von dem Stützelement angeordnet, dass es eine elastische Abstützung der Trageinheit an einer fahrzeugfesten Struktur außerhalb des Anbindungsabschnitts ermöglicht, und zwar insbesondere mit Abstand zur einem Anbindungselement des Anbindungsabschnitts, beispielsweise einer Anbindungs- oder Befestigungsöffnung, durch die ein Verbindungsmitte wie eine Schraube oder dergleichen hindurchgeführt ist.

Erfindungsgemäß weist der Anbindungsabschnitt ein Anbindungselement auf, welches in einer Anbindungsrichtung quer zur Längsrichtung ausgerichtet ist. Ein derartiges Anbindungselement kann beispielsweise eine Befestigungs- oder Verbindungselement wie eine Befestigungsbohrung oder dergleichen sein deren Achse in einer Höhenrichtung verläuft. Durch ein durch das Anbindungselement eingesetztes Befestigungselement kann das Anbindungselement und damit die Trageinheit in einer mit der Anbindungsrichtung identischen Höhenrichtung gegen eine fahrzeugfeste Struktur verspannt werden.

Es ist vorgesehen, dass das Stützelement in einer Stützrichtung quer zur Längsrichtung und quer zur Anbindungsrichtung vorsteht. Dadurch kann das Stützelement eine zusätzliche Stützkraft schräg oder senkrecht zu den im Stand der möglichen Stützrichtungen durch die Lenkwelle und/oder die Anbindungselemente auf die Trageinheit ausgeübt werden. Die Stützrichtung weist in eine Seitenrichtung, so dass die Trageinheit durch ein Stützelement zusätzlich seitlich abgestützt ist. Somit kann eine verbesserte Stützwirkung in den Raumrichtungen erfolgen, die im Stand der Technik beispielsweise nur reibschlüssig verbunden sind, beispielsweise die seitliche Abstützung im Bereich des Reibschlusses zwischen den Anbindungsabschnitten und einem Querträger des Fahrzeugs. Die zusätzliche elastische Fixierung durch das erfindungsgemäße Stützelement mit Abstand zum Anbindungsabschnitt unterdrückt unerwünschte Resonanzen von außerhalb des Anbindungsabschnitts angeordneten schwingfähigen Massen. Dadurch wird in vorteilhafter Weise die Eigenfrequenz der gesamten montierten Lenksäule erhöht.

Ein erfindungsgemäß elastisches Stützelement hat gegenüber einer starren Abstützung den weiteren Vorteil, dass durch Toleranzabweichungen mögliche Zwangskräfte elastisch aufgenommen und dadurch begrenzt werden können. Dadurch wird eine bessere Reproduzierbarkeit der erhöhten Eigenfrequenz ermöglicht. Außerdem ermöglicht dies eine einfachere Fertigung und Montage.

Es ist vorteilhaft, dass das Stützelement an dem Halteabschnitt angebracht ist. Dadurch kann die Trageinheit an dem Anbindungsabschnitt durch ein Befestigungselement fixiert sein, und zusätzlich durch das Stützelement am Halteabschnitt mit Abstand zum Anbindungsabschnitt abgestützt sein. Dadurch wird eine effektive Erhöhung der Eigenfrequenz ermöglicht.

Mit Vorteil kann ein Stützelement mit Abstand zum Verbindungsbereich, wo der Anbindungsabschnitt mit dem Halteabschnitt verbunden ist, an dem Halteabschnitt angeordnet sein. Dabei kann es vorteilhaft sein, dass das Stützelement mit seiner Stützrichtung in derselben Richtung wie ein Anbindungsabschnitt seitlich absteht, und zu diesem Anbindungsabschnitt Abstand in Höhenrichtung hat, die mit der Anbindungsrichtung bei der Montage des Anbindungselements im Fahrzeug korrespondiert. Dadurch kann die Trageinheit seitlich durch den Anbindungsabschnitt und zusätzlich durch das Stützelement an der Karosserie abgestützt werden, wodurch die Eigenfrequenz effektiv erhöht werden kann.

Es ist möglich, dass ein Anbindungsabschnitt sich seitlich quer zur Längsachse von dem Halteabschnitt erstreckt. Der Halteabschnitt kann in an sich bekannter Weise ein bügelförmiges, U-förmiges Profil aufweisen, mit nach unten gerichteten Seitenwangen, zwischen denen die Lenkwelle gehalten und gelagert ist. Von den Seitenwangen oder der Basis können sich die Anbindungselemente seitlich erstrecken, die sich flächenhaft-plattenförmig senkrecht zur Höhenrichtung angeordnet können. Auch ein erfindungsgemäßes Stützelement kann mit Vorteil mit Abstand zum Anbindungsabschnitt außen auf einer Seitenwange angeordnet sein, bevorzugt in entgegengesetzte Seitenrichtungen vorstehend auf beiden Seitenwangen, wo auch die Anbindungsabschnitte mit dem Halteabschnitt verbunden sein können. Dadurch kann eine effektive seitliche Abstützung der Seitenwangen gegen eine dafür vorgesehene Stützfläche an der fahrzeugfesten Struktur erfolgen, gegen die die Stützelemente elastisch mit Abstand zu den Anbindungselementen verspannbar sind. Dadurch, dass die Stützrichtung seitlich in Richtung der Erstreckung der Anbindungsabschnitte gerichtet ist, kann eine einfache und effektive Abstützung quer zu den in Anbindungs- bzw. Höhenrichtung ausgerichteten Anbindungselementen erfolgen, in die beispielsweise Schrauben als Befestigungselemente eingesetzt sind.

Die Trageinheit kann samt Halte- und Anbindungsabschnitten einstückig ausgebildet sein, beispielsweise als metallischen Druckgussteil, beispielsweise aus einer Aluminium- oder Magnesiumlegierung, oder als Blechformteil bevorzugt aus Stahlblech, oder aus einem Verbundwerkstoff. Alternativ kann die Trageinheit zusammengesetzt ausgebildet sein, beispielsweise aus miteinander verschweißten Blechformteilen. In jedem Fall kann durch Einsatz von erfindungsgemäßen Stützelementen auch bei einer vereinfachten Konstruktion, auch zur Realisierung einer vorteilhaften Leichtbauweise, ein hinreichend hohe Eigenfrequenz realisiert werden.

Es kann mit Vorteil vorgesehen sein, dass mindestens zwei Stützelemente paarweise mit entgegengesetzten Stützrichtungen angeordnet sind. Dadurch, dass beispielsweise zwei Stützelemente bezüglich der Längsachse in Richtung der Erstreckung der Anbindungsabschnitte seitlich vorstehen und sich jeweils seitlich gegen die fahrzeugfeste Struktur abstützen können, kann die Trageinheit elastisch zwischen den beiden Stützelementen eingespannt sein. Dadurch kann eine besonders effektive Erhöhung der Eigenfrequenz realisiert werden.

Bevorzugt können zwei Stützelemente an dem Halteabschnitt angebracht sein. Beispielsweise kann jeweils mindestens ein Stützelement außen an jeder Seitenwange eines U-förmigen Halteabschnitts angeordnet sein. Der U-förmige Halteabschnitt kann dadurch außerhalb seiner Fixierung über die Anbindungsabschnitte elastisch an der fahrzeugfesten Struktur verspannt sein.

Ein weiterer Vorteil der Erfindung ist, dass die Trageinheit durch die Wahl von Form, Abmessung und Positionierung der Stützelemente mit geringem konstruktiven Aufwand an vorhandene Bauformen von Querträgern angepasst werden kann. Die ermöglich eine erhöhte Flexibilität im konstruktiven Design und in der Fertigung. Darüber hinaus kann durch die Vorgabe der elastischen Eigenschaften der Stützelemente eine gezielte Optimierung des Schwingungsverhaltens und der Eigenfrequenz erfolgen.

Es ist vorteilhaft, dass ein Stützelement ein Federelement umfasst. Ein Federelement kann bevorzugt aus einem metallischen Werkstoff bereitgestellt werden, bevorzugt aus Federstahl. Dabei kann durch den Einsatz speziell angepasster Bauformen, beispielsweise Schrauben-, Ring-, Well- oder Blattfedern oder dergleichen eine flexible und optimierte Anpassung an den zur Verfügung stehenden Bauraum, die elastischen Eigenschaften und andere relevante Parameter erfolgen.

Eine vorteilhafte Ausführungsform sieht vor, dass das Federelement eine gebogene Blattfeder aufweist. Eine gebogene Blattfeder kann einfach konvex oder/und konkav nach außen von der Trageinheit abstehen, wobei sie sich beispielsweise entlang einer Außenfläche erstrecken kann, beispielsweise seitlich an einer Seitenwange eines U-förmigen Halteabschnitts. Ein Vorteil ist, dass eine Blattfeder einfach eine sehr flache Bauform ermöglicht, welche nur durch die Materialstärke und die Durchbiegung des Federblatts bestimmt wird. Eine derartige Bauform kann mit geringem Aufwand konstruktiv angepasst und gefertigt werden. Ein weiterer Vorteil ist, dass eine Blattfeder einfach an einem Ende fixiert werden kann, beispielsweise durch Punktschweißen, Nieten, oder auch lösbar durch Verschrauben.

Es kann vorteilhaft sein, dass das Stützelement an der Trageinheit fixiert ist. Es kann bevorzugt eine unlösbare Verbindung vorgesehen sein, beispielsweise stoff- und/oder formschlüssig durch Schweißen, Nieten, Pressen oder dergleichen. Alternativ kann auch eine lösbare Verbindung durch Schrauben oder dergleichen erfolgen.

Es kann vorgesehen sein, dass das Stützelement ein Dämpfungselement aufweist. Das Dämpfungselement kann beispielsweise ein Reibmittel umfassen, welches parallel zum elastischen Verformungsweg des Stützelements angeordnet und durch äußere Reibung oder alternativ oder zusätzlich durch innere Reibung mögliche elastische Schwingungen des Stützelements dämpft. Dadurch können unerwünschte Resonanzen und Eigenschwingungen weiter reduziert werden.

Der Halteabschnitt kann einen U-förmigen Haltebügel aufweisen. Bei dieser an sich bekannten Bauform erstreckt sich ein U-Profil in Längsrichtung, und die Lenkwelle ist zwischen den nach unten gerichteten U-Schenkeln aufgenommen. Die Anbindungsabschnitte können bevorzugt auf beiden Seiten nach außen gerichtet von den U-Schenkeln abstehen. In an sich bekannter Weise kann eine die Lenkwelle drehbar lagernde Manteleinheit zwischen den U-Schenkeln gehalten sein.

In einer vorteilhaften Weiterbildung kann die Trageinheit mehr als zwei Anbindungsabschnitte aufweisen, besonders bevorzugt vier Anbindungsabschnitte.

Mit Vorteil kann pro Anbindungsabschnitt ein diesem zugeordnetes erfindungsgemäßes Stützelement vorgesehen sein.

Es kann vorgesehen sein, dass die Lenkwelle relativ zur Trageinheit verstellbar ist. Beispielsweise kann die Lenkwelle in einer Manteleinheit drehbar gelagert sein, die relativ zur Trageinheit zur Einstellung der Höhenposition des Lenkrads in Höhenrichtung geneigt werden kann. Alternativ oder zusätzlich ist es möglich, dass die Lenkwelle und die Manteleinheit teleskopartig ausgestaltet sind, um eine Einstellung der Lenkradposition in Richtung der Längsachse zu ermöglichen.

Die Verstellbarkeit kann in an sich bekannten Weise manuell ausgestaltet sein, wobei eine zwischen Trageinheit und Manteleinheit wirksame Spanneinrichtung manuell zwischen einer Fixier- oder Lösestellung umgeschaltet werden kann, wobei in der Fixierstellung die Position der Lenkwelle mit der Trageinheit lösbar fixiert ist, und in der Lösestellung eine Verstellung in Höhen- und/oder Längsrichtung freigegeben wird.

Es ist weiterhin möglich, dass ein motorischer Verstellantrieb zwischen der Lenkwelle und der Trageinheit eingegliedert ist. In an sich bekannten Weise kann dabei ein elektromotorisch antreibbarer Spindeltrieb in Höhenrichtung zwischen einer die Lenkwelle lagernden Manteleinheit und der Trageinheit angeordnet sein, und zusätzlich oder alternativ in Längsrichtung zwischen teleskopartig verstellbaren Mänteln und längenverstellbarenLenkwellenteilen.

Weiters betrifft die Erfindung ein Kraftfahrzeug, umfassend einen Querträger, der mit einer zuvor beschriebenen Lenksäule gekoppelt ist. Durch die Kopplung von Lenksäule und Querträger ist das elastische Stützelement vorgespannt und steht in direktem oder indirektem Kontakt mit der Querträger. Dadurch wird die Eigenfrequenz der Lenksäule erhöht und es ist keine wesentliche konstruktive Anpassung der Trageinheit der Lenksäule oder des Querträgers erforderlich.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine weitere perspektivische Ansicht der Lenksäule gemäß Figur 1,
- Figur 3: eine vergrößerte Detailansicht von Figur 2,
- Figur 4: eine vergrößerte Ansicht der Lenksäule gemäß Figuren 1 bis 3 in Längsrichtung,
- Figur 5: ein erfindungsgemäßes Kraftfahrzeug mit einer erfindungsgemäßen Lenksäule.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

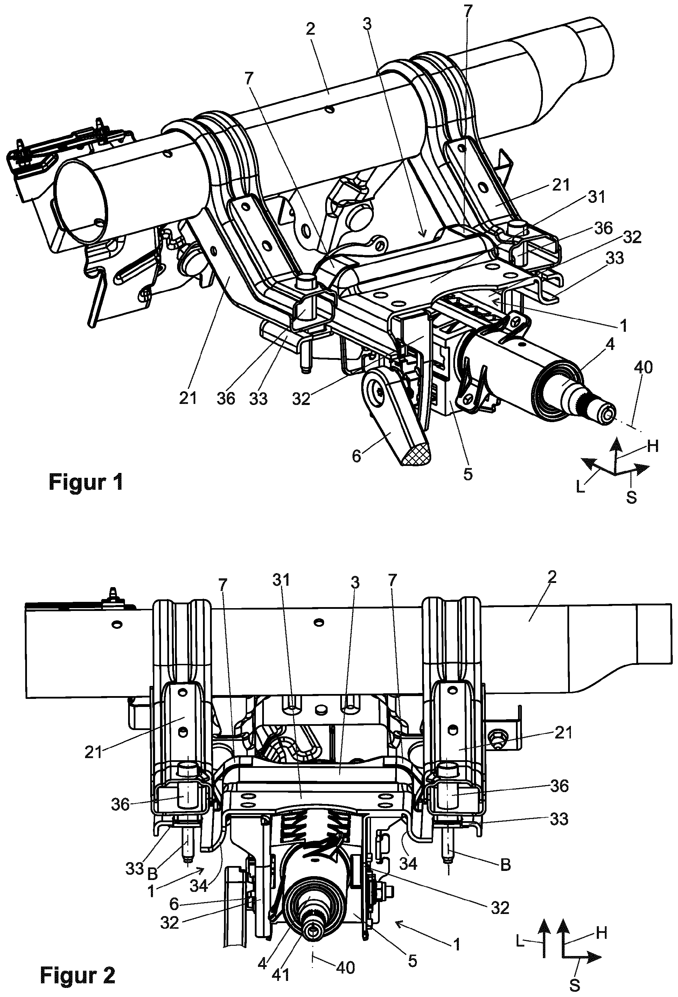

Figuren 1 und 2 zeigen perspektivische Gesamtansichten einer erfindungsgemäßen Lenksäule 1 schematisch in Einbaulage in einem Kraftfahrzeug, konkret an einem Querträger 2 des weiter nicht dargestellten Kraftfahrzeugs.

Die Lenksäule 1 umfasst eine erfindungsgemäß ausgestaltete Trageinheit 3, die an dem Querträger 2 fixiert ist, und von der eine Lenkwelle 4 um ihre Längsachse 40 drehbar gelagert gehalten ist. An ihrem hinteren Ende weist die Lenkwelle 4 einen Anschlussabschnitt 41 zur Anbringung eines nicht dargestellten Lenkrads auf.

Definitionsgemäß erstreckt sich die Längsachse 40 in einer Längsrichtung L bezüglich der Fahrtrichtung von hinten nach vorn, die Höhenrichtung H verläuft quer dazu von unten nach oben und die Seitenrichtung S seitlich quer zur Längsrichtung L und Höhenrichtung H. Dabei stehen Längsrichtung L und Höhenrichtung H senkrecht zur Seitenrichtung S, und die Längsrichtung L verläuft üblicherweise schräg nach vorn unten.

Die Trageinheit 3 weist einen U-förmigen Halteabschnitt 31 auf, von dem sich zwei Seitenwangen 32, welche die U-Schenkel bilden, nach unten erstrecken. Mit dem Halteabschnitt 31 sind zwei Anbindungsabschnitte 33 verbunden, welche in beide Seitenrichtungen S bezüglich der Seitenwangen 32 nach außen abstehen. Dabei ist jeder Anbindungsabschnitt 33 jeweils - bevorzugt einstückig - mit einem Verbindungsabschnitt 34 des Halteabschnitts 31 verbunden. Dabei erstrecken sich die beiden Verbindungsabschnitte 34 im Wesentlichen parallel zu den Seitenwangen 32, und die Anbindungsabschnitte 33 erstrecken sich flächenhaft senkrecht zur Höhenrichtung H, welche die Anbindungsrichtung dieser Anbindungsabschnitte 33 darstellt.

Die Lenkwelle 4 ist um ihre Längsachse 40 drehbar in einer Manteleinheit 5 gelagert, die zwischen den Seitenwangen 32 angeordnet ist. Zur Fixierung kann bei einer manuell verstellbaren Lenksäule 1, die in den Figuren nur beispielhaft dargestellt ist, eine Spanneinrichtung 6 vorgesehen sein, die wahlweise in eine Fixierstellung oder eine Lösestellung gebracht werden kann, beispielsweise durch eine manuelle Umschaltung. In der Fixierstellung werden die Seitenwangen 32 gegen die Manteleinheit 5 verspannt, um diese relativ zum Halteabschnitt 31 zu fixieren. In Lösestellung wird die Verspannung aufgehoben, so dass die Manteleinheit 5 samt Lenkwelle 4 in Höhenrichtung H zur Einstellung der Lenkradposition verstellt werden kann. Gegebenenfalls können die Manteleinheit 5 und die Lenkwelle 4 auch in Längsrichtung L teleskopierbar ausgestaltet sein, um eine Längsverstellung des Lenkrads zu ermöglichen.

Alternativ zur beispielhaft gezeigten manuellen Verstellung kann auch eine motorische Verstellung vorgesehen sein. Dabei können zwischen der Trageinheit 3 und der Lenkwelle 4 hier nicht dargestellte elektromotorische Verstellantriebe eingegliedert sein, beispielsweise elektromotorisch antreibbare Spindeltriebe, welche eine Verstellung in Höhenrichtung H und/oder Längsrichtung L ermöglichen. Die Spanneinrichtung 6 kann beim Einsatz selbsthemmender Verstellantriebe entfallen.

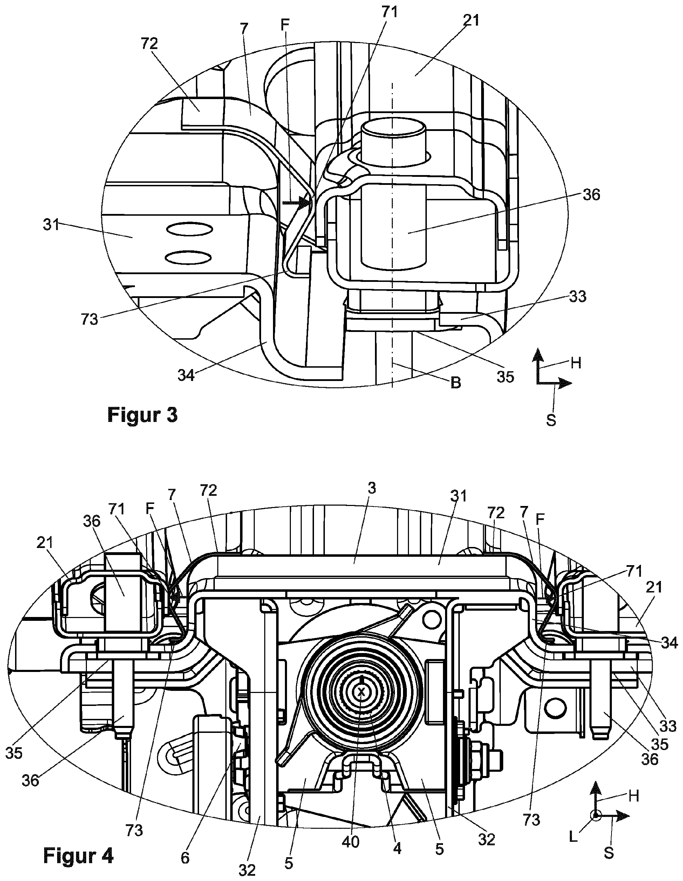

Die Anbindung der Lenksäule 1 erfolgt an zwei Tragstreben 21 des Querträgers 2, die derart angeordnet sind, dass die beiden Anbindungsabschnitte 33 in Höhenrichtung H von unten an die Tragstreben 21 angesetzt und daran fixiert werden können, wie in der Detailansicht von Figur 2 und der Axialansicht von hinten in Längsrichtung L der Längsachse 40 von Figur 4 erkennbar ist.

Die Anbindungsabschnitte 33 weisen als Anbindungselemente jeweils Befestigungsbohrungen 35 auf, mit in der Höhenrichtung H, also in der Anbindungsrichtung weisenden Bohrungsachsen B.

Durch jede Befestigungsbohrung 35 ist ein Befestigungselement 36 hindurchgeführt, beispielsweise Schraubbolzen oder dergleichen, um jeweils einen Anbindungsabschnitt 33 an der jeweiligen Tragstrebe 21 in Höhenrichtung H zu verspannen.

An dem Halteabschnitt 31 sind in Seitenrichtung vorstehend erfindungsgemäße Stützelemente 7 angebracht, die im Beispiel jeweils als federelastische Blattfeder aus Federstahl ausgebildet sind. Jedes Stützelement 7 weist einen konvex nach außen in Seitenrichtung S vorstehenden Bogenabschnitt 71 auf. Mit einem Befestigungsabschnitt 72 ist jedes blattförmige Stützelement 7 einseitig an der Trageinheit 3 fixiert, beispielsweise unlösbar durch Punktschweißung oder dergleichen. Das freie Ende 73 kann von außen lose gegen das Tragelement 3 abgestützt sein, dadurch kann der Bogenabschnitt 71 entgegen der vorgegebenen Federkraft F seitlich gegen den Halteabschnitt 31 elastisch eingefedert werden, wie in Figuren 3 und 4 angedeutet. Die Federkraft F wirkt nach außen in der Stützrichtung, die im gezeigten Beispiel der Seitenrichtung S entspricht.

Im äußeren Kontaktbereich des Bogenabschnitts 71 stützt sich jedes Stützelement 7 in Seitenrichtung S jeweils gegen eine Tragstrebe 21 ab, also quer zur Höhenrichtung H, die der Anbindungsrichtung entspricht, in der die Anbindungsabschnitte 33 mittels der Befestigungselemente 36 von unten gegen die Tragstreben 21 verspannt sind. Durch die beiden Stützelemente 7 ist die Trageinheit 3 praktisch oberhalb der Anbindungsabschnitte 33 zwischen den Tragstreben 21 elastisch eingespannt.

Dabei haben die Kontaktbereiche der Stützelemente 7 in Höhenrichtung H erfindungsgemäß jeweils einen Abstand A zum Anbindungsabschnitt 33, konkret zum von unten an der Tragstrebe 21 anliegenden oberen Kontaktbereich des Anbindungsabschnitts 33.

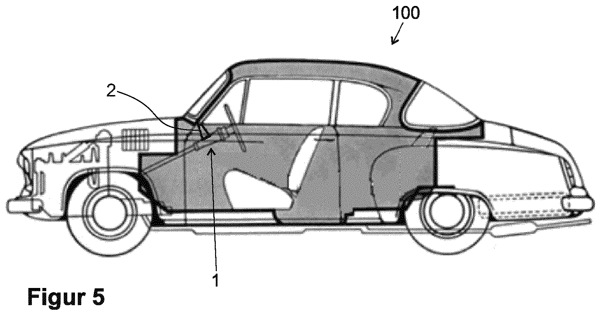

Die Figur 5 zeigt schematisiert ein Kraftfahrzeug 100 umfassend einen Querträger 2, der mit einer erfindungsgemäßen Lenksäule 1 gekoppelt ist, wobei die Lenksäule 1 an dem Querträger 2 fixiert ist.

Dadurch dass die Trageinheit 3 an ihren Anbindungsabschnitten 33 in Höhenrichtung H, der Anbindungsrichtung, an dem Querträger 2 verspannt ist, und erfindungsgemäß zusätzlich durch die Stützelemente 7 in Seitenrichtung zwischen den Tragstreben 21 verspannt und gestützt ist, wird die Eigenfrequenz der Lenksäule 1 im gezeigten eingebauten Zustand in vorteilhafter Weise erhöht. Dabei können durch die elastischen Stützelemente 7 Toleranzen elastisch ausgeglichen werden, so dass keine unerwünscht hohen Spannungen auftreten.

### Bezugszeichenliste

- 1: Lenksäule
- 2: Querträger
- 21: Tragstrebe
- 3: Trageinheit
- 31: Halteabschnitt
- 32: Seitenwangen
- 33: Anbindungsabschnitt
- 34: Verbindungsabschnitt
- 35: Befestigungsbohrung
- 36: Befestigungselement
- 4: Lenkwelle
- 40: Längsachse
- 41: Anschlussabschnitt
- 5: Manteleinheit
- 6: Spanneinrichtung
- 7: Stützelemente
- 71: Bogenabschnitt
- 72: Befestigungsabschnitt
- 73: freies Ende
- 100: Kraftfahrzeug

- L: Längsrichtung
- H: Höhenrichtung (Anbindungsrichtung)
- S: Seitenrichtung (Stützrichtung)
- B: Bohrungsachsen
- F: Federkraft
- A: Abstand

## Patentansprüche

1. Lenksäule (1) für ein Kraftfahrzeug, umfassend eine Trageinheit (3), die einen Halteabschnitt (31) aufweist, in dem eine Lenkwelle (4) um ihre in Längsrichtung (L) erstreckte Längsachse (40) drehbar gelagert ist, und die mindestens einen mit dem Halteabschnitt (31) verbundenen Anbindungsabschnitt (33) aufweist,
wobei mindestens ein elastisches Stützelement (7) nach außen vorstehend an der Trageinheit (3) angebracht ist,
wobei der Anbindungsabschnitt (33) ein Anbindungselement (35) aufweist, welches in einer Anbindungsrichtung (H) quer zur Längsrichtung (L) ausgerichtet ist,
**dadurch gekennzeichnet,**
**dass** das Stützelement (7) in einer Stützrichtung (S) quer zur Längsrichtung (L) und quer zur Anbindungsrichtung (H) vorsteht, und einen Kontaktbereich aufweist, der in Anbindungsrichtung (H) einen Abstand (A) zum Anbindungsabschnitt (33) aufweist.

2. Lenksäule nach Anspruch 1, **dadurch gekennzeichnet, dass** das Stützelement (7) an dem Halteabschnitt (31) angebracht ist.

3. Lenksäule nach einem der vorangehenden Ansprüche, **dadurch gekennzeichnet, dass** ein Anbindungsabschnitt (33) sich seitlich quer zur Längsachse (40) von dem Halteabschnitt (31) erstreckt.

4. Lenksäule nach einem der vorangehenden Ansprüche, **dadurch gekennzeichnet, dass** mindestens zwei Anbindungsabschnitte (33) bezüglich der Längsachse (40) gegenüberliegend angeordnet sind.

5. Lenksäule nach einem der vorangehenden Ansprüche, **dadurch gekennzeichnet, dass** mindestens zwei Stützelemente (7) paarweise mit entgegengesetzten Stützrichtungen angeordnet sind.

6. Lenksäule nach einem der vorangehenden Ansprüche, **dadurch gekennzeichnet, dass** ein Stützelement (7) ein Federelement umfasst.

7. Lenksäule nach Anspruch 6, **dadurch gekennzeichnet, dass** das Federelement (7) eine gebogene Blattfeder (7) aufweist.

8. Lenksäule nach einem der vorangehenden Ansprüche, **dadurch gekennzeichnet, dass** das Stützelement (7) an der Trageinheit (3) fixiert ist.

9. Lenksäule nach einem der vorangehenden Ansprüche, **dadurch gekennzeichnet, dass** das Stützelement (7) ein Dämpfungselement aufweist.

10. Lenksäule nach einem der vorangehenden Ansprüche, **dadurch gekennzeichnet, dass** der Halteabschnitt (31) einen U-förmigen Haltebügel aufweist.

11. Lenksäule nach einem der vorangehenden Ansprüche, **dadurch gekennzeichnet, dass** die Lenkwelle (4) relativ zur Trageinheit (3) verstellbar ist.

12. Lenksäule nach einem der vorangehenden Ansprüche, **dadurch gekennzeichnet, dass** ein motorischer Verstellantrieb zwischen der Lenkwelle (4) und der Trageinheit (3) eingegliedert ist.

13. Kraftfahrzeug (100) umfassend einen Querträger (2), der mit einer Lenksäule (1) gemäß einem der Ansprüchen 1 bis 12 gekoppelt ist.

## Claims

1. Steering column (1) for a motor vehicle, comprising a support unit (3) which has a holding section (31) in which a steering shaft (4) is mounted rotatably about its longitudinal axis (40) extending in the longitudinal direction (L), and which has at least one connecting section (33) connected to the holding section (31),
wherein at least one resilient support element (7) is attached to the support unit (3) so as to project outwards,
wherein the connecting portion (33) has a connecting element (35) which is aligned in a connecting direction (H) transverse to the longitudinal direction (L),
**characterized in**
**in that** the support element (7) projects in a support direction (S) transversely to the longitudinal direction (L) and transversely to the connection direction (H), and has a contact region which is at a distance (A) from the connection section (33) in the connection direction (H).

2. Steering column according to claim 1, **characterized in that** the support element (7) is attached to the retaining section (31).

3. Steering column according to one of the preceding claims, **characterized in that** a connecting section (33) extends laterally transversely to the longitudinal axis (40) of the retaining section (31).

4. Steering column according to one of the preceding claims, **characterized in that** at least two connecting sections (33) are arranged opposite one another with respect to the longitudinal axis (40).

5. Steering column according to one of the preceding claims, **characterized in that** at least two support elements (7) are arranged in pairs with opposite support directions.

6. Steering column according to one of the preceding claims, **characterized in that** one support element (7) comprises a spring element.

7. Steering column according to claim 6, **characterized in that** the spring element (7) comprises a curved leaf spring (7).

8. Steering column according to one of the preceding claims, **characterized in that** the support element (7) is fixed to the support unit (3).

9. Steering column according to one of the preceding claims, **characterized in that** the support element (7) has a damping element.

10. Steering column according to one of the preceding claims, **characterized in that** the retaining section (31) has a U-shaped retaining bracket.

11. Steering column according to one of the preceding claims, **characterized in that** the steering shaft (4) is adjustable relative to the support unit (3).

12. Steering column according to one of the preceding claims, **characterized in that** a motorized adjustment drive is incorporated between the steering shaft (4) and the support unit (3).

13. Motor vehicle (100) comprising a cross member (2) which is coupled to a steering column (1) according to one of claims 1 to 12.

## Revendications

1. Colonne de direction (1) pour un véhicule automobile, comprenant une unité de support (3) qui présente une section de maintien (31) dans laquelle un arbre de direction (4) est logé de manière rotative autour de son axe longitudinal (40) s'étendant dans la direction longitudinale (L), et qui présente au moins une section de liaison (33) reliée à la section de maintien (31),
au moins un élément de support élastique (7) étant monté en saillie vers l'extérieur sur l'unité de support (3),
la section d'attache (33) comprenant un élément d'attache (35) qui est orienté dans une direction d'attache (H) transversale à la direction longitudinale (L),
**caractérisé en ce que**
**en ce que** l'élément de support (7) fait saillie dans une direction de support (S) transversale à la direction longitudinale (L) et transversale à la direction de liaison (H), et présente une zone de contact qui, dans la direction de liaison (H), est à une distance (A) de la section de liaison (33).

2. Colonne de direction selon la revendication 1, **caractérisée en ce que** l'élément de support (7) est fixé à la section de maintien (31).

3. Colonne de direction selon l'une quelconque des revendications précédentes, **caractérisée en ce qu'**une portion d'attache (33) s'étend latéralement, transversalement à l'axe longitudinal (40), depuis la portion de support (31).

4. Colonne de direction selon l'une quelconque des revendications précédentes, **caractérisée en ce qu'**au moins deux portions d'attache (33) sont disposées en vis-à-vis par rapport à l'axe longitudinal (40).

5. Colonne de direction selon l'une des revendications précédentes, **caractérisée en ce qu'**au moins deux éléments de support (7) sont disposés par paires avec des directions de support opposées.

6. Colonne de direction selon l'une quelconque des revendications précédentes, **caractérisée en ce qu'**un élément d'appui (7) comprend un élément de ressort.

7. Colonne de direction selon la revendication 6, **caractérisée en ce que** l'élément élastique (7) comprend un ressort à lame (7) courbé.

8. Colonne de direction selon l'une des revendications précédentes, **caractérisée en ce que** l'élément de support (7) est fixé à l'unité de support (3).

9. Colonne de direction selon l'une des revendications précédentes, **caractérisée en ce que** l'élément de support (7) comporte un élément d'amortissement.

10. Colonne de direction selon l'une des revendications précédentes, **caractérisée en ce que** la section de retenue (31) présente un étrier de retenue en forme de U.

11. Colonne de direction selon l'une quelconque des revendications précédentes, **caractérisée en ce que** l'arbre de direction (4) est réglable par rapport à l'unité de support (3).

12. Colonne de direction selon l'une des revendications précédentes, **caractérisée en ce qu'**un entraînement de réglage motorisé est intégré entre l'arbre de direction (4) et l'unité de support (3).

13. Véhicule automobile (100) comprenant une traverse (2) couplée à une colonne de direction (1) selon l'une quelconque des revendications 1 à 12.
